# EUROPEAN PATENT SPECIFICATION

(11) **EP 4 411 683 B1**
(45) Date of publication and mention of the grant of the patent: **09.12.2026**
(21) Application number: 24153371.0
(22) Date of filing: 23.01.2024
(51) Int. Cl.: G08B 17/12, G08B 29/18, A62C 3/08, G01J 5/00, G08B 29/14, B64D 45/00

(54) **DUAL BAND INFRA RED OPTICAL FIRE DETECTOR**
OPTISCHER ZWEIBAND-INFRAROT-BRANDMELDER
DÉTECTEUR D'INCENDIE OPTIQUE INFRAROUGE À DOUBLE BANDE

(30) Priority: 23.01.2023 US 202318157924
(43) Date of publication of application: 07.08.2024
(73) Proprietor: Kidde Technologies, Inc., Wilson, NC 27896 (US)
(72) Inventor: NEWLIN, Scott K, Willow Spring, 27592 (US); KRAMER, Donald G., Wake Forest, 27587-7221 (US); CHERIAN, Judy, Morrisville, 27560 (US); CODISPOTI, Benjamin, Raleigh, 27613 (US)
(74) Representative: Dehns

(56) References cited:
- US-A- 4 249 168
- US-A- 4 296 324
- US-A- 4 529 881
- US-A- 4 701 624
- US-A- 5 051 590

## Description

### BACKGROUND

Exemplary embodiments pertain to the art of aircraft, and more particularly to optical flame detectors utilized in engine compartments of aircraft.

Flame detectors are utilized in aircraft in locations such as engine compartments to detect fire in the engine compartment. Present flame detectors utilized in, for example, helicopters or fixed wing aircraft especially, are prone to false alarms in which the detector indicates the presence of a fire where none exists. The main sources of such false alarms are temperature variation of hot surfaces on which the detector is focused, and temperature fluctuations in the engine compartment due to engine exhaust leaks and/or engine exhaust reingestion.

US4701624A discloses a fiber-optic fire sensing system for remote or harsh environments, such as aircraft fuel compartments and engine nacelles. Optical fibers transmit radiation from monitored compartments to remote short- and long-wavelength detectors, allowing sensitive electronics to be kept away from high-temperature areas. Fire detection is based on correlation or ratio processing between two spectral channels, with logic requiring compatible signals from both channels to reduce false alarms.

US5051590A discloses a fiber-optic flame detection and temperature measurement system using radiation detection in two spectral bands, for example about 0.8-1.1 µm and 1.8-2.1 µm. It combines flame detection with overheat sensing by placing one or more in-line optical filters in the fiber, whose transmission changes with temperature. A source injects reference/ test radiation into the fiber, and temperature is determined from the detected ratio between a reference wavelength and a temperature-dependent wavelength.

US4529881A discloses a flame detector in an explosion-proof housing with a viewing window and an internal test lamp. The test lamp is arranged to direct radiation onto the external face of the viewing window so that the detector cell can be tested without relying on external reflection.

The possibility and occurrence of false alarms creates a significant additional burden on the flight crew of the aircraft and impacts their confidence in the system. This can lead to ignored alarms or execution of emergency procedures when a true fire hazard or other unsafe conditions does not actually exist. The false indication of a fire may lead a crew to land the aircraft in unsafe conditions, resulting in injuries and/or damage to the aircraft.

### BRIEF DESCRIPTION

A flame detector for an aircraft according to the invention is defined in appended claim 1. A method of detecting a flame event according to the invention is defined in appended claim 8. Further details are set forth in the dependent claims.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an aircraft
FIG. 2 is a schematic illustration of an embodiment of an engine compartment of an aircraft;
FIG. 3 is a schematic illustration of an embodiment of an infrared flame detector;
FIG. 4 is a schematic illustration of another embodiment of an infrared flame detector;
FIG. 5 is a schematic illustration of an embodiment of a method of operating an infrared flame detector;

### DETAILED DESCRIPTION

A detailed description of one or more embodiments of the disclosed apparatus and method are presented herein by way of exemplification and not limitation with reference to the Figures.

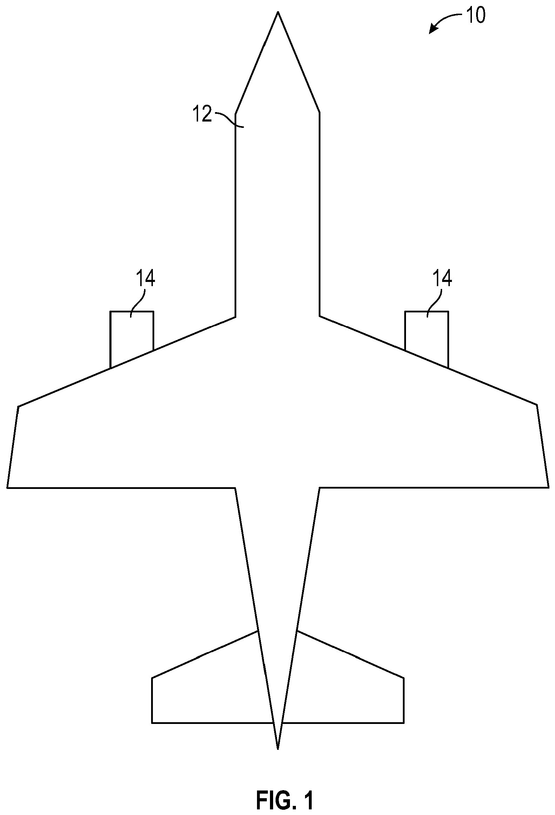

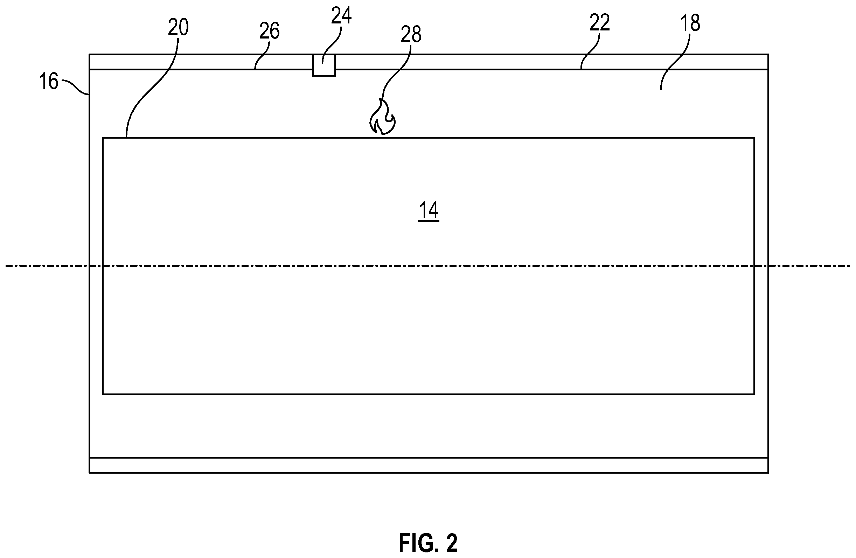

Referring to FIG. 1, illustrated is an embodiment of an aircraft 10. The aircraft 10 includes an airframe 12 and one or more engines 14, for example gas turbine engines 14, to provide propulsion for the aircraft 10. Referring now to the cross-sectional view of FIG. 2, the engines 14 are each enclosed in a nacelle 16. The nacelle 16 defines an engine compartment 18 at least partially surrounding the engine 14 between an outer casing surface 20 of the engine 14 and an inner nacelle surface 22 of the nacelle 16. One or more flame detectors 24 are located in the engine compartment 18, for example in a compartment wall 26 of the engine compartment 18 and are configured to detect the presence of fire in the engine compartment 18. The flame detector 24 detects emissions of infrared radiation in the engine compartment 18 from, for example, a fire 28.

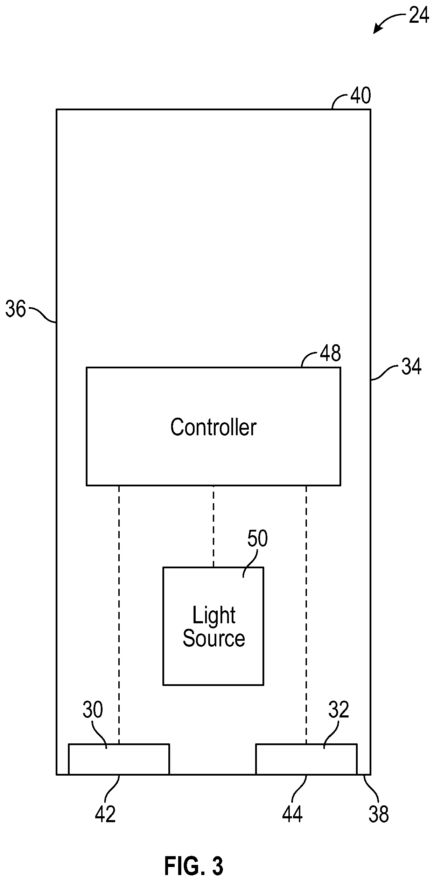

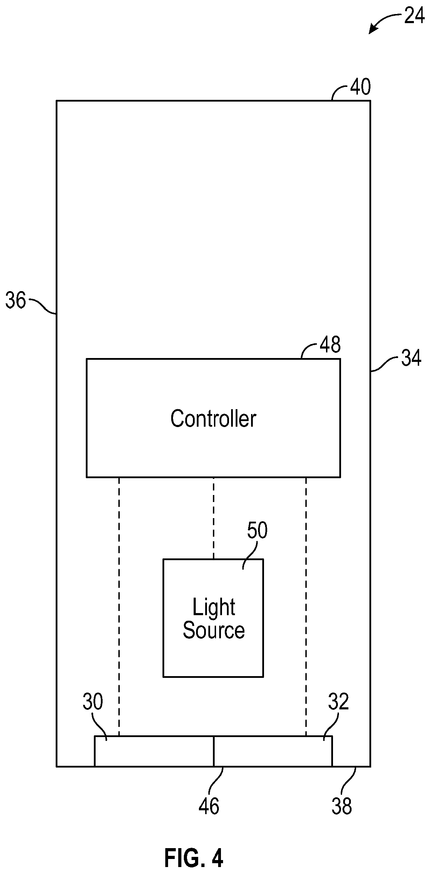

Referring now to FIG. 3, the flame detector 24 includes a first sensor 30 and a second sensor 32 disposed in a detector housing 34. The first sensor is configured to detect light emissions in a first infrared wavelength range, and the second sensor is configured to detect light emissions at a second wavelength range, different from the first wavelength range. While in some embodiments, the second wavelength range may be an infrared wavelength range, in other embodiment the second wavelength range may be, for example, an ultraviolet wavelength range. In some embodiments the detector housing 34 is cylindrical having a housing body 36 and a first end 38 and second end 40. In the illustrated embodiment the first sensor 30 and the second sensor 32 are located in the first end 38 at a first sensor window 42 and a second sensor window 44, respectively. While in the illustrated embodiment the first sensor 30 and the second sensor 32 are located at the first end 38, in other embodiments the sensors 30 and 32 may be located in the housing body 36. In another embodiment, illustrated in FIG. 4, the first sensor 30 and the second sensor 32 share a common sensor window 46.

Referring again to FIG. 3, the sensors 30, 32 are positioned side-by-side at the first end 38. In other embodiments, on the other hand, the sensors 30, 32, may have different relative positions.

The first sensor 30 is configured to detect emissions having a 4.3-4.4 micron wavelength signature. The infrared sensor 32 may be configured to detect emissions having a different wavelength signature, for example 0.88 microns. In some embodiments the second sensor 32 may be configured to detect ultraviolet light signals. The flame detector 24 includes a controller 48, which in some embodiments is located in the detector housing 34. One skilled in the art will readily appreciate, however, that in some embodiments the controller 48 may be located remotely, outside of the detector housing 34. The controller 48 is operably connected the first sensor 30 and the second sensor 32 to receive and evaluate signals from the first sensor 30 and the second sensor 32. The controller 48 includes control logic, which receives signals from the first sensor 30 and the second sensor 32 in a potential flame detection event. The control logic must receive detection signals from both the first sensor 30 and the second sensor 32 in order to positively identify the event as a flame detection. The controller 48 will then trigger one or more alerts or alarms, such as lights or audible alarms to alert the flight crew to the flame detection. This requirement of positive flame detection signals from both the first sensor 30 and the second sensor 32 before triggering alerts or alarms significantly reduces the occurrence of false alarms.

The flame detector 24 further includes an internal light source, such as a light emitting diode (LED) 50 in the detector housing 34. This LED 50 is connected to the controller 48 and allows for periodic self test of the flame detector 24 to ensure that the flame detector 24 is functioning properly. According to a non-claimed variant, to perform the test, the LED 50 emits signals in the detection range of the first sensor 30 and the second sensor 32. The first sensor 30 and the second sensor 32 detect the light signal emitted from the LED 50 and in turn signal the controller 48. Once the signals are received at the controller from both the first sensor 30 and the second sensor 32, the test is complete and the determination is made by the controller 48 that the flame detector 24 is operating properly. According to the invention, the LED 50 emits light signals only detectable by one of the sensors 30 or, 32 such that if the controller 48 receives detection signals from both of the sensors 30, 32, the test is unsuccessful and the flame detector 24 is not operating properly. In some configurations, the controller 48 will initiate the test periodically based on, for example, a time-based schedule, or the test may be initiated remotely by, for example, flight crew or maintenance personnel.

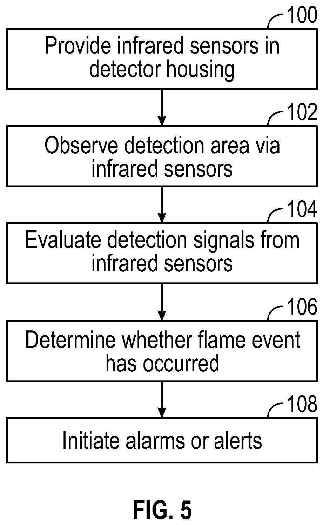

Referring now to FIG. 5 and with continued reference to FIG. 4, illustrated is a method of operation of the flame detector 24. At block 100, the sensors 30, 32 are provided in the detector housing 34. At block 102, the first sensor 30 observes a detection area and the second sensor 32 observes the same detection area. At block 104, the controller 48 evaluates signals received from the first sensor 30 and the second sensor 32. If flame detection signals are received from both the first sensor 30 and the second sensor 32, the controller 48 determines that a flame event has occurred at block 106. If a flame event is detected at block 106, the controller 48 initiates one or more alerts or alarms at block 108.

The flame detector 24 configurations disclosed herein reduce the occurrence of false alarms thus improving flight crew confidence in the flame detector 24. Further, the flame detector 24 allows for a self-test via inclusion of the LED 50. Further, in some embodiments the flame detector 24 can simply replace a prior art flame detector via retrofit, by packaging the sensors 30, 32 into the housing 34, which is a same size as a prior art housing.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure, which is defined solely by the appended claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A flame detector (24) for an aircraft (10), comprising:
a housing (34);
two sensors (30, 32) disposed in the housing (34) to detect light signals indicative of a flame event, the two sensors including:
a first sensor (30) configured to detect light signals at a first infrared wavelength range; and
a second sensor (32) configured to detect light signals at a second wavelength range; and
a controller (48) to receive signals from the two sensors (30, 32), and to determine the presence of the flame event only if the signals indicative of the flame event are received from both of the two sensors (30, 32);
**characterised by** comprising a light source (50) disposed in the housing (34) to emit light signals for test of the flame detector (24), wherein the light source (50) is a light emitting diode configured to emit light signals only detectable by one of the sensors (30, 32), such that if the controller (48) receives detection signals from both of the sensors, the test is unsuccessful and the detector (24) is not operating properly.

2. The flame detector (24) of claim 1, wherein the two sensors (30, 32) detect emissions having different wavelength signatures.

3. The flame detector (24) of claim 1 or 2, wherein a first sensor (30) of the two infrared sensors is configured to detect infrared emissions having a 4.3-4.4 micron signature.

4. The flame detector (24) of claim 3, wherein a second sensor (32) of the two sensors is configured to detect emissions having a 0.88 micron signature.

5. The flame detector (24) of any preceding claim, wherein the two sensors share a common window (46) in the housing (34).

6. The flame detector of any preceding claim, wherein the controller (48) is disposed in the housing (34).

7. A flame detector system of an aircraft (10), comprising:
an engine (14) disposed in an engine compartment (18); and
a flame detector (24) disposed in the engine compartment (18), wherein the flame detector (24) is a flame detector as claimed in any preceding claim.

8. A method of detecting a flame event, comprising:
providing (100) a flame detector (24) comprising two sensors (30, 32) in a detector housing (34), the two sensors (30, 32) including:
a first sensor (30) configured to detect light signals at a first infrared wavelength range; and
a second sensor (32) configured to detect light signals at a second wavelength range;
testing the flame detector (24) via a light source (50) disposed in the housing (34), wherein the light source (50) is a light emitting diode and testing the flame detector (24) comprises emitting light signals only detectable by one of the sensors (30, 32), such that if the controller (48) receives detection signals from both of the sensors, the test is unsuccessful and the detector (24) is not operating properly;
observing (102) a detection area via the two sensors (30, 32);
evaluating (104) detection signals received from the two sensors (30, 32) at a controller (48); and
determining (106) the presence of a flame event only if detection signals are received from both of the two sensors (30, 32).

9. The method of claim 8, further comprising initiating one or more alarms or alerts when the presence of a flame event is determined.

10. The method of claim 8 or 9, wherein the two sensors (30, 32) detect emissions having different wavelength signatures.

11. The method of claim 8, 9 or 10, wherein a first sensor (30) of the two sensors (30, 32) is configured to detect infrared emissions having a 4.3-4.4 micron signature.

12. The method of claim 11, wherein a second sensor (32) of the two sensors (30, 32) is configured to detect emissions having a 0.88 micron signature.

## Patentansprüche

1. Flammendetektor (24) für ein Luftfahrzeug (10), umfassend:
ein Gehäuse (34);
zwei Sensoren (30, 32), die in dem Gehäuse (34) eingerichtet sind, um Lichtsignale zu detektieren, die ein Flammenereignis angeben, wobei die zwei Sensoren Folgendes einschließen:
einen ersten Sensor (30), der dazu konfiguriert ist, Lichtsignale in einem ersten Infrarotwellenlängenbereich zu detektieren; und
einen zweiten Sensor (32), der dazu konfiguriert ist, Lichtsignale in einem zweiten Wellenlängenbereich zu detektieren; und
ein Steuergerät (48), um Signale von den zwei Sensoren (30, 32) zu empfangen und das Vorhandensein des Flammenereignisses nur zu bestimmen, wenn die Signale, die das Flammenereignis angeben, von beiden der zwei Sensoren (30, 32) empfangen werden;
**gekennzeichnet durch** Umfassen einer Lichtquelle (50), die in dem Gehäuse (34) eingerichtet ist, um Lichtsignale zum Testen des Flammendetektors (24) zu emittieren, wobei die Lichtquelle (50) eine Leuchtdiode ist, die dazu konfiguriert ist, Lichtsignale zu emittieren, die nur durch einen der Sensoren (30, 32) detektierbar sind, sodass, wenn das Steuergerät (48) Detektionssignale von beiden der Sensoren empfängt, der Test nicht erfolgreich ist und der Detektor (24) nicht ordnungsgemäß arbeitet.

2. Flammendetektor (24) nach Anspruch 1, wobei die zwei Sensoren (30, 32) Emissionen detektieren, die unterschiedliche Wellenlängensignaturen aufweisen.

3. Flammendetektor (24) nach Anspruch 1 oder 2, wobei ein erster Sensor (30) der zwei Infrarotsensoren dazu konfiguriert ist, Infrarotemissionen zu detektieren, die eine 4,3-4,4-Mikrometer-Signatur aufweisen.

4. Flammendetektor (24) nach Anspruch 3, wobei ein zweiter Sensor (32) der zwei Sensoren dazu konfiguriert ist, Emissionen zu detektieren, die eine 0,88-Mikrometer-Signatur aufweisen.

5. Flammendetektor (24) nach einem der vorhergehenden Ansprüche, wobei sich die zwei Sensoren ein gemeinsames Fenster (46) in dem Gehäuse (34) teilen.

6. Flammendetektor nach einem der vorhergehenden Ansprüche, wobei das Steuergerät (48) in dem Gehäuse (34) eingerichtet ist.

7. Flammendetektorsystem eines Luftfahrzeugs (10), umfassend:
ein Triebwerk (14), das in einem Triebwerksraum (18) eingerichtet ist; und
einen Flammendetektor (24), der in dem Triebwerksraum (18) eingerichtet ist, wobei der Flammendetektor (24) ein Flammendetektor nach einem der vorhergehenden Ansprüche ist.

8. Verfahren zum Detektieren eines Flammenereignisses, umfassend:
Bereitstellen (100) eines Flammendetektors (24), der zwei Sensoren (30, 32) in einem Detektorgehäuse (34) umfasst, wobei die zwei Sensoren (30, 32) Folgendes einschließen:
einen ersten Sensor (30), der dazu konfiguriert ist, Lichtsignale in einem ersten Infrarotwellenlängenbereich zu detektieren; und
einen zweiten Sensor (32), der dazu konfiguriert ist, Lichtsignale in einem zweiten Wellenlängenbereich zu detektieren;
Testen des Flammendetektors (24) über eine Lichtquelle (50), die in dem Gehäuse (34) eingerichtet ist, wobei die Lichtquelle (50) eine Leuchtdiode ist und das Testen des Flammendetektors (24) Emittieren von Lichtsignalen umfasst, die nur durch einen der Sensoren (30, 32) detektierbar sind, sodass, wenn das Steuergerät (48) Detektionssignale von beiden der Sensoren empfängt, der Test nicht erfolgreich ist und der Detektor (24) nicht ordnungsgemäß arbeitet;
Beobachten (102) eines Detektionsbereichs über die zwei Sensoren (30, 32);
Auswerten (104) von Detektionssignalen, die von den zwei Sensoren (30, 32) empfangen werden, an einem Steuergerät (48); und
Bestimmen (106) des Vorhandenseins eines Flammenereignisses, nur wenn Detektionssignale von beiden der zwei Sensoren (30, 32) empfangen werden.

9. Verfahren nach Anspruch 8, ferner umfassend Initiieren eines oder mehrerer Alarme oder Warnungen, wenn das Vorhandensein eines Flammenereignisses bestimmt wird.

10. Verfahren nach Anspruch 8 oder 9, wobei die zwei Sensoren (30, 32) Emissionen detektieren, die unterschiedliche Wellenlängensignaturen aufweisen.

11. Verfahren nach Anspruch 8, 9 oder 10, wobei ein erster Sensor (30) der zwei Sensoren (30, 32) dazu konfiguriert ist, Infrarotemissionen zu detektieren, die eine 4,3-4,4-Mikrometer-Signatur aufweisen.

12. Verfahren nach Anspruch 11, wobei ein zweiter Sensor (32) der zwei Sensoren (30, 32) dazu konfiguriert ist, Emissionen zu detektieren, die eine 0,88-Mikrometer-Signatur aufweisen.

## Revendications

1. Détecteur de flamme (24) pour un aéronef (10), comprenant :
un boîtier (34) ;
deux capteurs (30, 32) disposés dans le boîtier (34) pour détecter des signaux lumineux indiquant un événement de flamme, les deux capteurs comportant :
un premier capteur (30) configuré pour détecter des signaux lumineux dans une première plage de longueurs d'onde infrarouges ; et
un second capteur (32) configuré pour détecter des signaux lumineux dans une seconde plage de longueurs d'onde ; et
un dispositif de commande (48) pour recevoir des signaux à partir des deux capteurs (30, 32) et pour déterminer la présence de l'événement de flamme uniquement si les signaux indicatifs de l'événement de flamme sont reçus à partir des deux capteurs (30, 32) ;
**caractérisé en ce qu'**il comprend une source lumineuse (50) disposée dans le boîtier (34) pour émettre des signaux lumineux destinés au test du détecteur de flamme (24), dans lequel la source lumineuse (50) est une diode électroluminescente configurée pour émettre des signaux lumineux détectables uniquement par l'un des capteurs (30, 32), de sorte que si le dispositif de commande (48) reçoit des signaux de détection à partir des deux capteurs, le test échoue et le détecteur (24) ne fonctionne pas correctement.

2. Détecteur de flamme (24) selon la revendication 1, dans lequel les deux capteurs (30, 32) détectent des émissions ayant des signatures de longueur d'onde différentes.

3. Détecteur de flamme (24) selon la revendication 1 ou 2, dans lequel un premier capteur (30) des deux capteurs infrarouges est configuré pour détecter des émissions infrarouges ayant une signature de 4,3 à 4,4 microns.

4. Détecteur de flamme (24) selon la revendication 3, dans lequel un second capteur (32) des deux capteurs est configuré pour détecter les émissions ayant une signature de 0,88 micron.

5. Détecteur de flamme (24) selon une quelconque revendication précédente, dans lequel les deux capteurs partagent une fenêtre commune (46) dans le boîtier (34).

6. Détecteur de flamme selon une quelconque revendication précédente, dans lequel le dispositif de commande (48) est disposé dans le boîtier (34).

7. Système de détection de flamme pour un aéronef (10), comprenant :
un moteur (14) disposé dans un compartiment moteur (18) ; et
un détecteur de flamme (24) disposé dans le compartiment moteur (18), dans lequel le détecteur de flamme (24) est un détecteur de flamme selon une quelconque revendication précédente.

8. Procédé de détection d'un événement de flamme, comprenant :
la fourniture (100) d'un détecteur de flamme (24) comprenant deux capteurs (30, 32) dans un boîtier de détecteur (34), les deux capteurs (30, 32) comportant :
un premier capteur (30) configuré pour détecter des signaux lumineux dans une première plage de longueurs d'onde infrarouges ; et
un second capteur (32) configuré pour détecter des signaux lumineux dans une seconde plage de longueurs d'onde ;
le test du détecteur de flamme (24) via une source lumineuse (50) disposée dans le boîtier (34), dans lequel la source lumineuse (50) est une diode électroluminescente et le test du détecteur de flamme (24) comprend l'émission de signaux lumineux détectables uniquement par l'un des capteurs (30, 32), de sorte que si le dispositif de commande (48) reçoit des signaux de détection à partir des deux capteurs, le test échoue et le détecteur (24) ne fonctionne pas correctement ;
l'observation (102) d'une zone de détection via les deux capteurs (30, 32) ;
l'évaluation (104) de signaux de détection reçus à partir des deux capteurs (30, 32) au niveau d'un dispositif de commande (48) ; et
la détermination (106) de la présence d'un événement de flamme uniquement si des signaux de détection sont reçus à partir des deux capteurs (30, 32).

9. Procédé selon la revendication 8, comprenant en outre le déclenchement d'une ou de plusieurs alarmes ou alertes lorsque la présence d'un événement de flamme est déterminée.

10. Procédé selon la revendication 8 ou 9, dans lequel les deux capteurs (30, 32) détectent des émissions ayant des signatures de longueur d'onde différentes.

11. Procédé selon la revendication 8, 9 ou 10, dans lequel un premier capteur (30) des deux capteurs (30, 32) est configuré pour détecter des émissions infrarouges ayant une signature de 4,3 à 4,4 microns.

12. Procédé selon la revendication 11, dans lequel un second capteur (32) des deux capteurs (30, 32) est configuré pour détecter des émissions ayant une signature de 0,88 micron.
